Europäisches Patentamt

European Patent Office

Office européen des brevets

(11) Veröffentlichungsnummer: **0 076 502**
**A2**

(12) # EUROPÄISCHE PATENTANMELDUNG

(21) Anmeldenummer: **82109148.5**

(22) Anmeldetag: **04.10.82**

(51) Int. Cl.³: **A 01 F 15/00**

(30) Priorität: **05.10.81 US 308223**

(43) Veröffentlichungstag der Anmeldung:
**13.04.83 Patentblatt 83/15**

(84) Benannte Vertragsstaaten:
**DE FR GB IT**

(71) Anmelder: **DEERE & COMPANY**
**1 John Deere Road**
**Moline Illinois 61265(US)**

(72) Erfinder: **Koning, Richard William**
**411 Elmdale**
**Ottumwa Iowa 52501(US)**

(72) Erfinder: **Meiers, Gerald Franklyn**
**1014 Chester**
**Ottumwa Iowa 52501(US)**

(72) Erfinder: **Anstey, Henry Dennis**
**R.R. 5**
**Ottumwa Iowa 52501(US)**

(74) Vertreter: **Fricke, Joachim, Dr. et al,**
**Dr. R. Döring, Dr. J. Fricke, Patentanwälte**
**Josephspitalstrasse 7**
**D-8000 München 2(DE)**

(54) **Maschine zum Herstellen zylindrischer Ballen.**

(57) Es ist eine Maschine zum Herstellen zylindrischer Ballen vorgesehen mit mehreren, horizontal gelagerten Rollen und mehreren darum gelegten Riemen, von denen gegenläufige Riemenabschnitte eine Wickelkammer mit nach unten gerichteter Eintrittsöffnung für das Erntegut begrenzen, wobei dicht beieinanderliegende obere Rollen die Wickelkammer nach oben abschließen. Es ist eine aus hydraulischen Mitteln und Federeinrichtungen vorgesehene Steuereinrichtung vorgesehen, mittels der auf sehr einfache und sehr wirksame Weise die Spannung im Riemen, die Zunahme des Durchmessers der Wickelkammer mit der Zunahme des Ballens, und die Ballendichte gesteuert werden können. Diese Steuereinrichtung wirkt auf oberhalb der Wickelkammer liegende unabhängig zueinander bewegbare Rollen ein, die über das Steuersystem miteinander in Wirkungszusammenhang stehen. Außerdem sind die hydraulischen Mittel, die zum Öffnen eines torartigen Abschnittes des Maschinengehäuses für das Auswerfen des fertigen Ballens vorgesehen sind, in das hydraulische Steuersystem integriert.

EP 0 076 502 A2

Maschine zum Herstellen zylindrischer Ballen

Die Erfindung betrifft eine Maschine zum Herstellen zylindrischer Ballen, bei der in einem Hauptrahmen mehrere Riemen führende Rollen so gelagert sind, daß zwei gegenläufig bewegte Riemenabschnitte 38,44 eine Wickelkammer begrenzen, die zwischen zwei im Abstand angeordneten Rollen einen Ernteguteinlaß aufweist und nach oben durch zwei im Abstand oberhalb des Einlasses und im engen gegenseitigen Abstand an einem gemeinsamen Tragteil angeornete Rollen abgeschlossen ist, wobei der Tragteil am Hauptrahmen schwenkbar so gelagert ist, daß die Rollen bei zunehmendem Ballendurchmesser nach oben ausweichen können und bei der eine Riemenspanneinrichtung vorgesehen ist.

Eine Maschine dieser Art ist beispielsweise aus der US-PS 42 52 057 bekannt. Diese Maschine umfaßt einen Hauptrahmen, der z.B. mittels eines Ackerschleppers über ein Feld gezogen werden kann. Das bei der Maschine vorgesehene System aus Rollen und von diesen getragenen Riemen ist so ausgebildet, daß bestimmte Abschnitte des Riementrums zwischen vorbestimmten, zum Teil beweglich angeordneten Rollen die Wickelkammer bestimmen, in der der zylindrische Ballen zur Bildung eines Ballenkernes angewickelt und zum fertigen zylindrischen Ballen von vorbestimmtem Durchmesser gewickelt wird. Dazu wird das Erntegut bei der Fahrt über das Feld von einem üblichen Aufnehmer aufgenommen und in den Einlaß der Wickelkammer eingeführt. Die beweglichen Rollen ermöglichen, daß die Wickelkammer entsprechend der Zunahme des Durchmessers des Ballens in ihrem Volumen zunimmt. An den Enden des Ballens ist die Wickelkammer durch im gegenseitigen Abstand angeordnete aufrechte Seitenwände begrenzt. Durch entsprechende Bandführung ist ein ausreichender Längenvorrat für die Bänder vorgesehen, der bei zunehmendem Ballendurchmesser in den Bereich der Riemenabschnitte eingezogen wird, welche die Wickelkammer begrenzen.

Um einen ordnungsgemäßen Betrieb zu gewährleisten ist es erforderlich, daß die Bänder und die Tragteile für die Rollen unter einer ausreichenden Vorspannung gehalten werden und nur unter vorbestimmter Spannung bei Zunahme des Ballendurchmessers nachgeben. Hierbei ist wesentlich, daß die notwendigen Überlängen der Riemen zuverlässig aufgenommen, vor allem aber auch der Ballen mit der erforderlichen Dichte gewickelt wird. Der Rahmen weist einen torartigen Abschnitt auf, der bei Vollendung der Herstellung des Ballens in eine abgekippte Stellung gegenüber dem Hauptteil des Rahmens geschwenkt werden kann, um so eine Freigabeöffnung zum Austreten des fertigen zylindrischen Ballens zu schaffen, der einfach aus der Wickelkammer herausrollen kann.

Bei den bekannten Vorrichtungen sind die Mittel, die dafür Sorge tragen sollen, daß die Expansion der Wickelkammer in genau gesteuerter Weise erfolgt, sehr aufwendig, kostspielig und auch anfällig gegen Störungen.

Es ist Aufgabe der Erfindung eine Maschine der eingangs näher bezeichneten Art so weiterzubilden, daß die aufgezeigten Schwierigkeiten vermieden werden. Vor allem soll die Maschine mit einfacheren Mitteln als bisher versehen werden, um die erforderliche Vorspannung der beweglichen Rollen zu gewährleisten und eine genauere Steuerung der Ausdehnung der Wickelkammer und der Ballendichte zu erreichen.

Diese Aufgabe wird erfindungsgemäß dadurch gelöst, daß die Riemenspanneinrichtung eine weitere Rolle oberhalb der beiden am Tragteil gelagerten Rollen an einer Halterung aufweist, die am Hauptrahmen auf dem Tragteil zu und von diesem weg bewegbar ist, und daß eine Verbindungseinrichtung zwischen dem Tragteil und der Halterung vorgesehen ist, mittels der die weitere Rolle nach oben bewegbar ist, wenn der Tragteil sich nach oben bewegt. Diese weitere Rolle dient dabei im Zusammenhang mit der Verbindungseinrichtung als Steuereinrichtung in einer solchen Weise, daß man eine bessere Steuerung der Ballendichte erzielt, und zwar ohne wesentlich größeren Aufwand und ohne zusätzlichen Energieverbrauch für den Antrieb. Die Steuereinrichtung kann dabei aus einer Kombination von einem hydraulischen System mit einem Federsystem bestehen, wobei eine Einstellung dieser Systeme möglich ist. Dabei kann vorteilhafterweise auch das hydraulische System, das zum Aufschwenken des torartigen Teils des Hauptrahmens zum Ausstoßen des fertigen Ballens vorgesehen ist, in das hydraulische Steuersystem mit integriert werden.

Die Verbindungseinrichtung kann eine Vorrichtung umfassen, welche der nach oben gerichteten Bewegung des Tragteils einen entsprechenden elastischen Widerstand entgegensetzt. Dabei kann die Vorrichtung so ausgebildet und angeordnet sein, daß sie zugleich eine Riemenspannkraft auf die weiteren Rollen ausübt. Zweckmäßigerweise kann auf dem Tragteil eine zusätzliche Rolle gelagert sein, die über einen Riemenabschnitt mit der weiteren Rolle verbunden ist, und zwar in einer solchen Weise, daß eine Bewegung nach oben der weiteren Rolle über den Riemenabschnitt und die zusätzliche Rolle eine Hubkraft auf den Tragteil ausübt.

Die Schwenkachse des Tragteil am Hauptrahmen ist vorteilhafterweise im Abstand und parallel zu den beiden die Wickelkammer nach oben begrenzenden Rollen angeordnet, während der Tragteil einen Kraftarm aufweist, an dem die Verbindungseinrichtung angreift, die anderenends an einem um eine zu der Schwenkachse parallele Achse schwenkbaren Arm angreift, an dem die zweite Rolle gelagert ist.

Die Erfindung wird nachfolgend anhand schematischer Zeichnungen an einem Ausführungsbeispiel näher erläutert.

Es zeigen:

Figur 1 eine Seitenansicht einer Maschine der in Frage stehenden Gattung, die gemäß der Erfindung weitergebildet ist.

Figur 2 eine Seitenansicht, wobei die dem Betrachter näher liegende Seitenwand der Maschine abgenommen ist, um die inneren Komponenten freizulegen, wobei die wesentlichen außenliegenden Komponenten in gestrichelten Linien wiedergegeben sind.

Figur 3 eine ähnliche Ansicht, wobei jedoch ein fortgeschrittener Zustand bei der Ballenherstellung wiedergegeben ist.

Figur 4 in ähnlicher Weise ein weiter fortgeschrittenes Stadium der Ballenherstellung.

Figur 5 in ähnlicher Darstellung die Vollendung des Ballens und die Stellung der Maschine beim Ausstoßen des fertigen Ballens aus der Wickelkammer und

Figur 6 eine schematische Darstellung der bevorzugten Ausführungsform des hydraulischen Systems, das zur Steuerung der Dichte des Ballens und zur Steuerung des Ballenauswurfes verwendet wird.

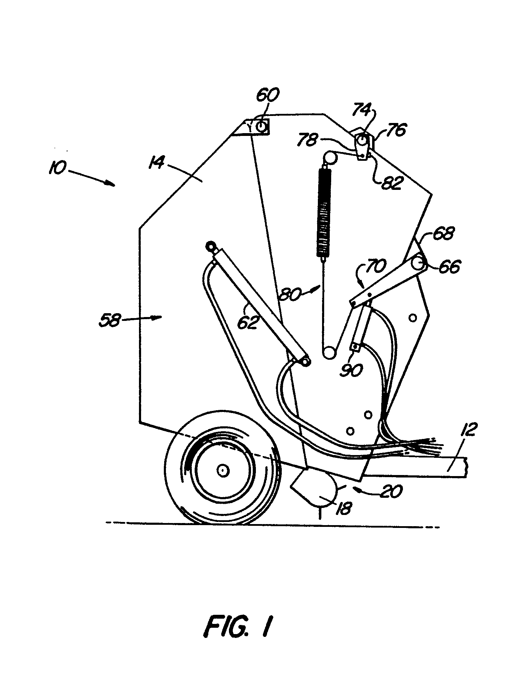

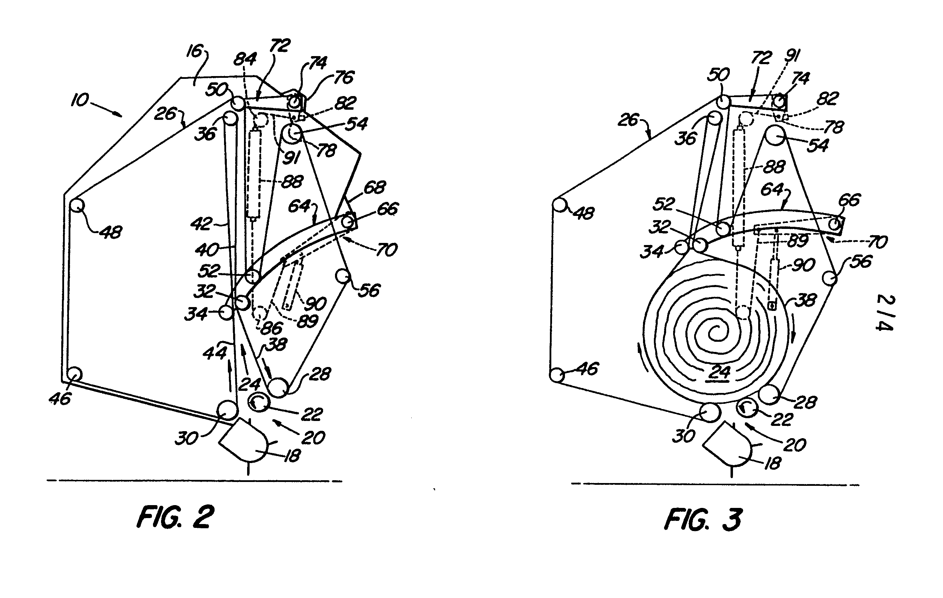

Die in Fig. 1 gezeigte Maschine ist eine typische Maschine zum Herstellen zylindrischer Ballen und weist einen Hauptrahmen 10 und ein Zugglied 12 zur Verbindung mit einem nicht dargestellten Ackerschlepper auf. Mit Hilfe dieses Ackerschleppers kann die Maschine über ein Feld mit zuvor geerntetem Erntegut gezogen werden. Der Hauptrahmen weist sich gegenüberliegende und parallel zur Fahrtrichtung verlaufende senkrechte Begrenzungswände 14 und 16 auf, von denen die hintere in Fig. 1 nicht erkennbar ist und die vordere in den Figuren 2 bis 5 abgenommen dargestellt ist, um die inneren Komponenten freizulegen. Eine übliche Erntegutaufnahmevorrichtung 18 führt das auf dem Boden ruhende Erntegut nach oben in einen Ernteguteinlaß 20. Dieser ist nach unten offen und grenzt an eine Wickelkammer an, deren Durchmesser sich bei der Herstellung des Ballens vergrößern kann. Eine Querrolle 22 unterstützt die Bildung des Ballenkerns, wie dies die Fig. 2 bis 5 veranschaulichen. Die zur Herstellung des Ballens dienende Einrichtung ist ein System, das mehrere quer orientierte Rollen und einen oder mehrere endlose und über die Rollen gezogene Riemen umfaßt. Ein Teil dieses Systems umfaßt eine vordere untere Rolle 28, eine rückwärtige untere Rolle 30, eine vordere Zwischenrolle 32, eine rückwärtige Zwischenrolle 34 und eine obere Rolle 36. Ein Riemenabschnitt 38 erstreckt sich von der Rolle 28 zu der Rolle 32 und setzt sich bei 40 bis zu der oberen Rolle 36 fort und kehrt dann nach unten bei 82 mittels eines Abschnittes 44 zu der rückwärtigen unteren Rolle 30 zurück. Es wird nachfolgend deutlich, daß die Abschnitte 38 und 44 eine anfängliche Wickelkammer begrenzen, deren Durchmesser zunimmt, wenn das Erntegut in einen Ballen von fortlaufend zunehmender Größe aufgerollt wird, und zwar bis eine vorbestimmte Größe erreicht ist.

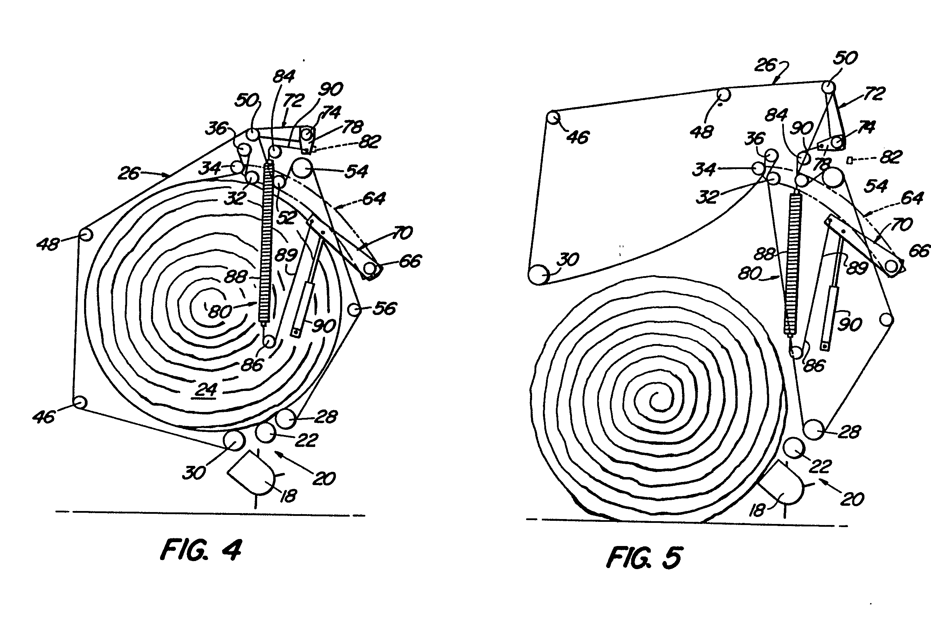

Der oder die Riemen erstrecken sich von der rückwärtigen unteren Rolle 30 zu einer rückwärtigen unteren Rolle 46, von dieser nach oben zu einer Rolle 48, und von dieser weiter nach oben und nach vorne bis zu einer Rolle 50. Von dieser führt der Riemen zu einer dritten Zwischenrolle 42 und von dieser zurück nach oben zu einer oberen Rolle 54. Von dieser läuft der Riemen zu einer vorderen Rolle 56 und zurück zu der vorderen unteren Rolle 28. Die Rollen 30, 46 und 48 werden durch einen torartigen Abschnitt 58 des Hauptrahmens 10 getragen. Dieser Rahmenabschnitt bildet im wesentlichen den ganzen rückwärtigen Teil des Hauptrahmens der Maschine und ist nahe den oberen Enden der Seitenwände durch entsprechende Schwenkzapfen 60 schwenkbar gelagert. Wenn der Ballen fertiggestellt ist (siehe Fig. 5) wird der torartige Abschnitt nach oben und nach rückwärts in eine Offenstellung geschwenkt, so daß der fertiggestellte Ballen nach rückwärts ausgestoßen werden kann. Irgendwelche dafür geeignete Mittel können vorgesehen sein, z.B. eine hydraulische Einheit 62, die nur in Fig. 1 zu sehen ist, an jeder Seite der Maschine. Diese ist typischerweise mit dem nicht dargestellten hydraulischen System des ziehenden Ackerschleppers verbunden.

Nach einem Merkmal der Erfindung sind die drei Rollen 32, 34 und 52 auf einem Tragteil 64 drehbar gelagert. Dieser besteht aus allgemein von vorne nach hinten ragenden Armen, die jeweils unmittelbar auf der Innenseite der beiden Seitenwände angeordnet und auf einer gemeinsamen Schwenkachse 66 befestigt sind, die schwenkbar durch entsprechende Abschnitte 68 an den Seitenwänden 14 und 16 gelagert ist. Ein Hebelarm 70 ist an jedem Ende der Bälle 66 befestigt, und zwar jeweils unmittelbar außerhalb jeder Seitenwand (Fig. 2 zeigt nur einen solchen Arm). Dieser Arm erstreckt sich nach rückwärts. Die obere weitere Rolle 50 ist auf einer Halterung 72 gelagert, die aus zwei jeweils innen liegenden Hebelarmen besteht, die an einer oberen Schwenkwelle 74 befestigt sind. Diese Welle ist mit ihren Enden bei 76 an den Seitenwänden des Hauptrahmens 10 gelagert. An jeder Seite der Maschine ist ein äußerer Hebelarm 78 an dem zunächst liegenden Ende der Schwenkwelle außerhalb der zugehörigen Seitenwand befestigt. Eine aus Kette und Kettenrädern bestehende Verbindungseinrichtung 80 verbindet den äußeren Hebelarm 78 und den Hebelarm 70 auf jeder Seite der Maschine. Dies ist für die zunächst liegende Seite in Fig. 1 dargestellt. Ein Anschlag 82 ist für jeden Hebelarm 78 vorgesehen.

Das hier zur Veranschaulichung verwendete flexible Spannungsglied umfaßt ein oberes Kettenrad 84, ein unteres Kettenrad 86, eine Zugfeder 88 in Form einer Schraubenfeder, einen oberen Kettenabschnitt 81, der an dem Hebelarm 78 angeschlossen und über das obere Kettenrad gelegt ist und mit dem oberen Ende der Feder 88 verbunden ist, sowie einen unteren Kettenabschnitt 89. Dieser ist mit dem unteren Ende der Feder verbunden, über das untere Kettenrad 86 gelegt und dann mit dem freien Ende des Hebelarmes 70 verbunden. Die Verbindungseinrichtung 80 bildet einen Teil der Steuereinrichtung zur Steuerung der Position der Rollen 32,34 und 52, wenn der Ballen in seiner Größe zunimmt. Es wird dazu bemerkt, daß der gegenseitige Abstand zwischen den Rollen 32 und 34 eng genug ist, um zu verhindern, daß Teile des Ballens nach oben bei dem Wickelvorgang ausweichen können. Die Rollen 32 und 34 bilden somit zusammen mit den zugehörigen Riemenabschnitten eine obere Begrenzung der Wickelkammer und sie können nur gemeinsam und als Einheit nachgeben, um dem zunehmenden Durchmesser des Ballens Rechnung zu tragen.

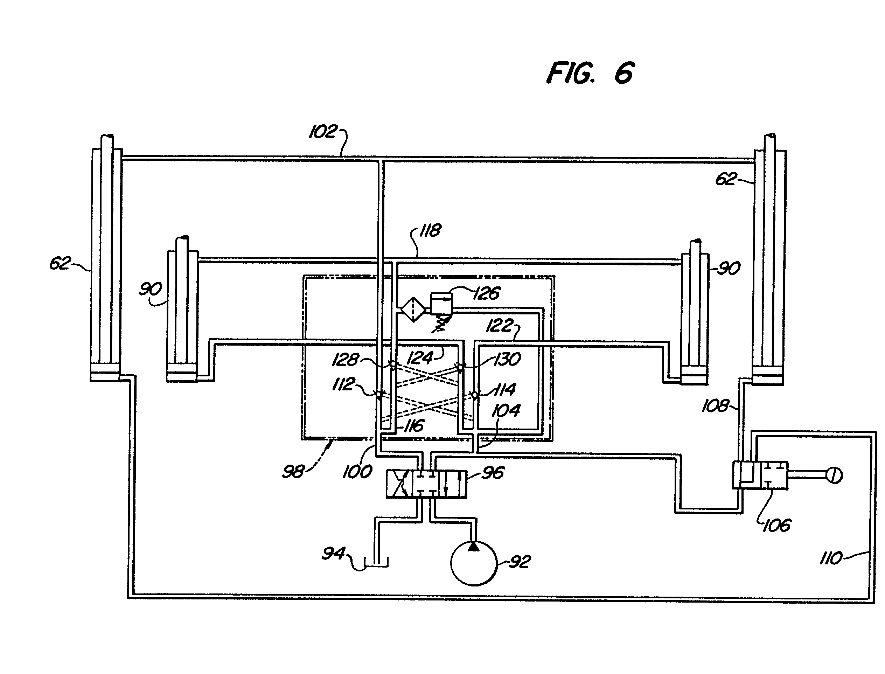

Ein weitere Teil der Steuereinrichtung umfaßt auf jeder Seite der Maschine eine hydraulische Zylindereinheit 90, die mit entsprechenden hydraulischen Verbindungen an ein hydraulisches System, z.B. des Ackerschleppers angeschlossen ist. Dies wird im Zusammenhang mit Fig. 6 näher beschrieben.

Ein typisches hydraulisches Grundsystem, wie es üblicherweise Ackerschleppern zugeordnet ist, ist in Fig. 6 gezeigt. Es umfaßt eine Pumpe 92, einen Fluidvorrat 94 und ein Hauptsteuerventil 96. Es ist aus Fig. 6 ferner ersichtlich, daß die Zylinder 62 und 90 parallel geschaltet sind unter Zwischenschaltung einer Ventilsteuereinrichtung 98. Eine Betätigung des Schwenkzylinders 92 für den torartigen Abschnitt des Hauptrahmens wird zunächst betrachtet. Eine Leitung 100 führt von dem Steuerventil 96 zum oberen Ende des Zylinders 62 über die Zweige 102. Wenn diese Leitung unter Druck versetzt wird, fahren die Zylinder 62 ein. Eine weitere Leitung 104 führt von dem Steuerventil 96 zu den unteren Enden der beiden Zylinder 62 über ein Abschaltventil 106, das in Fig. 6 in der Offenstellung gezeigt ist, von wo Zweigleitungen 108 und 110 zu den unteren Enden der Zylinder 62 führen, um so den Zylinder zum Öffnen des Torabschnittes nach Fig. 5 auszufahren. Wenn das Abschaltventil 106 geschlossen ist, können die Zylinder weder ausfahren noch einfahren. Ein vorgesteuertes Rückschlagventil 112 ist in der Leitung 102 angeordnet, um ein Rückfließen von Öl durch das Steuerventil 96 zu verhindern, wenn der Torabschnitt geschlossen ist. Die gestrichelten Linien zeigen die Vorsteuerungsvorgänge.

Nachfolgend wird die Steuerung für die Zylinder 90 betrachtet. Eine Leitung 160 zweigt von der Leitung 100 ab und führt zu den oberen Enden der Zylinder 90 über die Zweigleitungen 118. Die Leitung 104 führt zu den unteren Enden der Zylinder 90 über die Zweigleitungen 122 und 124. Eine einstellbare Entlastungsventileinrichtung 126, die in Fig. 6 in der geschlossenen Stellung gezeigt ist, verbindet die Leitungen 116 und 104 miteinander. Diese Leitungen umfaßen jeweils ein Rückschlagventil 128, um ein Rückfließen von Fluid durch das Steuerventil 96 zu verhindern, wobei die gestrichelten Linien die Vorsteuerfunktion für die rückschlagventile wiedergibt. Die durch Vorsteuerung betätigten Rückschlagventile 114 und 130 sind vorgesehen, um zu verhindern, daß die Zylinder 90 einfahren, solange die Pumpe 92 nicht arbeitet und das Ventil 96 nicht betätigt ist. Dieses System liefert eine getrennte Leitung und ein getrenntes Rückschlagventil für jeden Zylinder, was bedeutet, daß wenigstens zwei Komponenten des Systems ausfallen müssen, bevor beide hydraulische Zylinder zufällig einfahren können.

Die Arbeitsweise der Maschine ist wie folgt:

Das am Erdboden liegende Erntegut wird durch den Aufnehmer 18 aufgenommen und in den Einlaßbereich 20 befördert. Die Riemenabschnitte 38 und 44 laufen gemäß den Pfeilen in entgegengesetzten Richtungen. Wenn mehr Erntegut über den Einlaß in die ursprüngliche Wickelkammer eingeleitet wird nimmt der Rollballen in seiner Größe nach den Fig. 3 und 4 zu. In dem stetigen Übergang aus dem Zustand von beispielsweise nach Fig. 2 in den Zustand z.B. nach Fig. 4 bewegen sich die Rollen 32,34 und 52 nach oben, wenn der Ballen zunimmt. Der Träger 64 bewegt sich entsprechend nach oben und zwar unter der Steuerung des kombinierten Systems aus hydraulischen Zylindern 90 und Federvorspanneinrichtung. Die Ballendichte kann durch Veränderung des Druckes an den Zylindern 90 verändert werden.

Die Rollen 32 und 34 bleiben stets oberhalb des Ballens, und zwar während des ganzen Ballenwickelvorganges. Während des Wickelvorganges bleibt der torartige Abschnitt des Hauptrahmens fest in seiner Stellung. Dadurch verändert sich auch nicht die Lage der durch den Torabschnitt getragenen Rollen. Die Rollen 32 und 34 dienen im wesentlichen nur dazu, den Ballen durch die Riemen eingeschlossen zu halten. Obwohl diese Rollen dem Ballenumfang näher kommen, wenn der Ballen zunimmt, üben sie jedoch keinen nennenswerten, nach unten gerichteten Druck auf den Ballen aus, und zwar aufgrund der Tatsache, daß eine Hubkraft durch den oberen inneren Hebelarm 72 auf die Zwischenrolle 52 ausgeübt wird. Es ist tatsächlich nicht wünschenswert, daß die Rollen 32 und 34 eine nach unten gerichtete Kraft auf den Ballen ausüben, da hierdurch die Energie zum Antrieb wesentlich vergrößert wird, ohne daß eine nennenswerte Vergrößerung der Ballendichte erzielt würde. Wenn man den Verbrauch an Antriebskraft vernachlässigt, ist es selbstverständlich möglich die Dichte durch Veränderung der Verhältnisse zu erzielen, derart, daß die Rollen 32 und 34 eine nach unten gerichtete Kraft auf den Ballen ausüben.

Eine weitere Funktion der Rolle 50 besteht darin zur Kompensation auftretender Spitzenwerte der Antriebskraft zu dienen. Je dichter der Tragteil 64 an dem Ballen anliegt umso mehr Antriebskraft ist erforderlich, um die Rollen oder den Ballen zu drehen. Wenn solche Zustände existieren, ergibt sich eine höhere Zugkraft in den Riemen, und zwar induziert durch die höhere Antriebswirkung auf die Riemen. Dadurch wird eine nach oben gerichtete Kraft auf die Rollen 32 und 34 ausgeübt, um so den Tragteil 64 nach oben über den Ballen anzuheben. Wenn der Ballen ausgeworfen wird nach Fig. 5, dienen die Zylinder 90 auch dazu, den Tragteil im angehobenen Zustand zu halten. Hierdurch wird ein Riemendurchhang geschaffen, was wünschenswert sowohl für Wartungszwecke als auch bezüglich der unterstützenden Funktion zur Verhinderung des Anhäufens von Material an dieser Stelle ist.

Die Vorteile der hydraulischen Einrichtung, welche die Zylinder 90 und die zugehörigen Ventile umfassen, bestehen darin, daß die Zylinder einen kontrollierten Widerstand der nach oben gerichteten Bewegung des Tragteils in einer effektiveren Weise erlauben, als dies mit Federn alleine möglich ist. Weiterhin erhält man dadurch eine konstantere Riemenspannung und somit auch eine gleichförmigere Ballendichte und auch geringere Erfordernisse bezüglich Antriebsspitzenwerte. Der Widerstand gegenüber dem Zylindersystem tritt auf, wenn Fluid über die unteren und oberen Enden und die einstellbaren Entlastungsventileinrichtungen 26 ausgetauscht wird. Während der normalen Ballenbildung ist die Geometrie der Maschine derart, daß der Riemen durch die Rollen 32 und 34 und 52 in dem ausgewogenen Maße freigegeben wird, so daß die Rolle 50 in Anlage an der Oberseite 82 nach Fig. 1 verbleibt. Die Feder 88 liefert eine zunehmende Kraft auf die Rolle 50, wenn die Ballengröße zunimmt, um eine ausreichende Riemenspannung im rücklaufenden Trum zu gewährleisten und so einen Riemenschlupf zu verhindern. Dies ist wichtig, da dann, wenn eine Unregelmäßigkeit oder ein Klumpen mit den Rollen 32 und 34 in Berührung kommt, die Rolle 50 die gesamte Spannung für den rücklaufenden Riemen liefern muß, die notwendig ist, um den Riemen überhaupt anzutreiben. Wenn der Ballen ausgeworfen wird, werden beide Zylindereinheiten 62 und 90 ausgefahren.

Es ist ersichtlich, daß das Riemensystem selbstverständlich mehrere Seite an Seite angeordnete Einzelriemen umfaßt, und daß bestimmte der beschriebenen Rollen angetriebene Walzen sind, wobei der Antrieb z.B. von der Zapfwelle eines Ackerschleppers abgeleitet werden kann. Begriffe wie "obere" oder "untere" sollen im vorliegenden Zusammenhang nicht einschränkend gelten.

Patentansprüche

1. Maschine zum Herstellen zylindrischer Ballen, bei der in einem Hauptrahmen mehrere Riemen führende Rollen so gelagert sind, daß zwei gegenläufig bewegte Riemenabschnitte eine Wickelkammer begrenzen, die zwischen zwei im Abstand angeordneten Rollen einen Erntegut-Einlaß aufweist und nach oben durch zwei im Abstand oberhalb des Einlasses im engen gegenseitigen Abstand an einem gemeinsamen Tragteil angeordnete Rollen abgeschlossen ist, wobei der Tragteil am Hauptrahmen schwenkbar so gelagert ist, daß die Rollen bei zunehmendem Ballendurchmesser nach oben ausweichen können, und bei der eine Riemenspanneinrichtung vorgesehen ist, dadurch g e k e n n z e i c h n e t , daß die Riemenspanneinrichtung eine weitere Rolle (50) oberhalb der beiden, am Tragteil (64) gelagerten Rollen (32,34) an einer Halterung (72) aufweist, die am Hauptrahmen (10) auf dem Tragteil (64) zu und von diesem weg bewegbar ist, und daß eine Verbindungseinrichtung zwischen Tragteil (64) und Halterung (72) vorgesehen ist, mittels der die weitere Rolle (50) nach oben bewegbar ist, wenn der Tragteil (64) sich nach oben bewegt.

2. Maschine nach Anspruch 1, dadurch g e k e n n - z e i c h n e t , daß die Verbindungseinrichtung eine Vorrichtung (80) umfaßt, welche der nach oben gerichteten Bewegung des Tragteils (64) einen elastischen Widerstand entgegensetzt.

3. Maschine nach Anspruch 2, dadurch g e k e n n - z e i c h n e t , daß die Vorrichtung (80) so angeordnet und ausgebildet ist, daß sie zugleich eine Riemenspannkraft auf die weitere Rolle (50) ausübt.

0076502

4. Maschine nach Anspruch 3, dadurch  g e k e n n -
z e i c h n e t , daß eine hydraulische Einrichtung (90) wenigstens einen Teil der einen nachgebenden Widerstand bildenden Vorrichtung (80) darstellt.

5. Maschine nach einem der Ansprüche 1 bis 4, dadurch
g e k e n n z e i c h n e t , daß auf dem Tragteil (64) eine zusätzliche Rolle (52) gelagert ist,
die über einen Riemenabschnitt mit der weiteren
Rolle(50)verbunden ist, derart, daß eine Bewegung
nach oben der weiteren Rolle (50) über den Riemenabschnitt und die zusätzliche Rolle (52) eine Hubkraft auf den Tragteil (64) ausübt.

6. Maschine nach einem der Ansprüche 1 bis 5, dadurch
g e k e n n z e i c h n e t , daß die Schwenkachse
(66) des Tragteils (64) am Hauptrahmen (10) im
Abstand und parallel zu den beiden, die Wickelkammer (24) nach oben begrenzenden Rollen (32,34)
angeordnet ist und der Tragteil einen Kraftarm (70)
besitzt, an dem die Verbindungseinrichtung angreift,
die anderen Endes an einen um eine zu der Schwenkachse (66) parallele Achse (74) schwenkbaren Arm
(72,78) angreift, an dem die zweite Rolle (50) gelagert ist.

7. Maschine nach Anspruch 1, dadurch  g e k e n n -
z e i c h n e t , daß eine hydraulische Einrichtung
(90) zum Anheben des Tragteils (64) bis auf eine
Höhe oberhalb des fertigen Ballens vorgesehen ist.

8. Maschine nach einem der Ansprüche 1 bis 6, dadurch
g e k e n n z e i c h n e t , daß die Verbindungseinrichtung einen doppel wirkenden hydraulischen Zylinder (90) zwischen dem Hauptrahmen (10) und dem Tragteil (64) aufweist und ein Fluidversorgungskreis vorgesehen ist, der ein die Enden des Zylinders (90) verbindendes Druckentlastungsventil (126) besitzt.

9. Maschine nach Anspruch 1, dadurch g e k e n n - z e i c h n e t , daß der Tragteil (64) und die Halterung (72) jeweils Kraftarme ()0,82) aufweisen, zwischen denen eine Federanordnung vorgesehen ist.

10. Maschine nach einem oder mehreren der Ansprüche 1 bis 9, bei der der Hauptrahmen einen torartig zwischen einer Schließ- und einer Offenstellung schwenkbaren Teil zur Freigabe eines fertig gewickelten Ballens aufweist, dem ein Betätigungszylinder zugeordnet ist, dadurch g e k e n n z e i c h n e t , daß eine hydraulische Betätigungseinrichtung (90) zwischen Tragteil (64) und Hauptrahmen (10) angeordnet ist, mittels der der Tragteil (64) anhebbar ist, und daß die beiden Betätigungseinrichtungen (62,90) selektiv gemeinsam betätigbar sind, um den Tragteil nach oben zu schwenken, wenn der torartige Teil (58) in die Offenstellung geschwenkt wird.

1/4

FIG. 1

0076502

FIG. 3

FIG. 2

0076502

FIG. 5

FIG. 4

FIG. 6